# EUROPÄISCHE PATENTSCHRIFT

(11) **EP 2 269 849 B1**
(45) Veröffentlichungstag und Bekanntmachung des Hinweises auf die Patenterteilung: **20.06.2018**
(21) Anmeldenummer: 10167943.9
(22) Anmeldetag: 30.06.2010
(51) Int. Cl.: B60H 1/32

(54) **Vorrichtung zur Steuerung einer Klimatisierungseinrichtung für ein Kraftfahrzeug**
Method for controlling an air-conditioning unit for a vehicle
Dispositif pour le contrôle d'une installation de conditionnement d'air pour un véhicule

(30) Priorität: 03.07.2009 DE 102009027458
(43) Veröffentlichungstag der Anmeldung: 05.01.2011
(73) Patentinhaber: Deere & Company, Moline, IL 61265 (US)
(72) Erfinder: Dietrich, Gunnar, 68199 Mannheim (DE)
(74) Vertreter: Dehnhardt, Florian Christopher

(56) Entgegenhaltungen:
- EP-A1- 1 077 146
- DE-A1- 10 316 795
- DE-C1- 19 938 927
- JP-A- 2006 205 931

## Beschreibung

Die Erfindung betrifft eine Vorrichtung zur Steuerung einer Klimatisierungseinrichtung für ein Kraftfahrzeug, umfassend einen mittels eines Kompressors betriebenen Kühlkreislauf mit einem Kältemittel, das mit einem Schmiermittel zur Schmierung des Kompressors versetzt ist. Bei dem Kraftfahrzeug kann es sich insbesondere um ein landwirtschaftliches Nutzfahrzeug in Gestalt eines Traktors oder dergleichen handeln.

Eine derartige Vorrichtung zur Steuerung einer Klimatisierungseinrichtung für ein Kraftfahrzeug geht aus der DE 199 38 927 C1 hervor. Die Vorrichtung umfasst einen Kühlkreislauf sowie einen darin angeordneten Verdichter bzw. Kompressor. Der Kompressor ist mittels eines in dem Kraftfahrzeug befindlichen Verbrennungsmotors antreibbar. Zu diesem Zweck befindet sich zwischen dem Verbrennungsmotor und dem Kompressor eine elektrisch betätigbare Kompressorkupplung, die mit einem elektrischen Schalter in Verbindung steht, mittels dessen sich die Kompressorkupplung zur Inbetriebnahme des Kompressors einrücken lässt. Zur Schmierung des Kompressors ist das im Kühlkreislauf befindliche Kältemittel mit einem geeigneten Schmiermittel versetzt, wobei bei längeren Kompressorstandzeiten die Möglichkeit besteht, dass sich das Schmiermittel im Kühlkreislauf absetzt, mithin also eine Entmischung des Kühlmittels und des Schmiermittels auftritt. Dies hat zur Folge, dass der Kompressor im Falle seiner Inbetriebnahme zunächst solange mit verminderter Schmierung läuft, bis Schmiermittel aus dem Kühlkreislauf zum Kompressor gelangt. Unter ungünstigen Bedingungen kann dies zur Beschädigung bzw. einem verfrühten Verschleiß des Kompressors führen. Die bekannte Vorrichtung weist daher eine Zeitsteuereinrichtung auf, die den Kompressor unabhängig vom momentanen Betätigungszustand des Schalters in der Anlaufphase des Verbrennungsmotors durch Einrücken der Kompressorkupplung für eine vorgegebene Zeitspanne in Betrieb setzt. Da das Einrücken der Kompressorkupplung entsprechend einem festen Zeitablaufschema erfolgt, bleibt der tatsächliche Grad der Entmischung des Kältemittel und des Schmiermittels unberücksichtigt. Daher besteht gerade bei längeren Kompressorstandzeiten die Möglichkeit, dass der Kompressor während der Anlaufphase vergleichsweise hohen Belastungen ausgesetzt ist.

Dokument JP 2006-205931 A offenbart eine Vorrichtung zur Steuerung einer Klimatisierungseinrichtung gemäß den Oberbegriff des Anspruchs 1. Aufgabe der vorliegenden Erfindung ist es daher, eine Vorrichtung der eingangs genannten Art derart auszubilden, dass diese eine besonders schonende bzw. verschleißarme Inbetriebnahme des Kompressors auch im Falle längerer Kompressorstandzeiten gewährleistet.
Diese Aufgabe wird durch eine Vorrichtung mit den Merkmalen des Patentanspruchs 1 gelöst.
Die erfindungsgemäße Vorrichtung zur Steuerung einer Klimatisierungseinrichtung für ein Kraftfahrzeug umfasst einen mittels eines Kompressors betriebenen Kühlkreislauf mit einem Kältemittel, das mit einem Schmiermittel zur Schmierung des Kompressors versetzt ist, wobei mittels einer Steuereinrichtung ein zur Inbetriebnahme des Kompressors aufgewandtes Antriebsmoment nach Maßgabe einer ermittelten Zeitgröße, die eine verstrichene Kompressorstandzeit wiedergibt, verringert wird.
Da der Grad der Entmischung des Kältemittels und des Schmiermittels unmittelbar von der verstrichenen Kompressorstandzeit abhängt, lässt sich durch entsprechende Verringerung des Antriebsmoments nach Maßgabe der ermittelten Zeitgröße eine besonders schonende und verschleißarme Inbetriebnahme des Kompressors gewährleisten.

Vorteilhafte Weiterbildungen der erfindungsgemäßen Vorrichtung gehen aus den Unteransprüchen hervor.

Vorzugsweise verringert die Steuereinrichtung das zur Inbetriebnahme des Kompressors aufgewandte Antriebsmoment, wenn sich durch Auswertung der ermittelten Zeitgröße ergibt, dass die verstrichene Kompressorstandzeit einen vorgegebenen Schwellenwert überschreitet. Die Vorgabe des Schwellenwerts kann nach Maßgabe der charakteristischen Absetzungsneigung des verwendeten Schmiermittels erfolgen und in der Größenordnung mehrerer Wochen bzw. Monate liegen. In der Regel wird als Kältemittel handelsübliches R134A und als Schmiermittel ein Kältemittelöl, beispielsweise PAG-Öl (Polyalkylenglykol), verwendet.

Um eine gezielte Beeinflussung des Antriebsmoments zu ermöglichen, kann zwischen dem Kompressor und dem Antriebsaggregat des Kraftfahrzeugs eine elektrisch betätigbare Kompressorkupplung angeordnet sein, deren Kraftschluss seitens der Steuereinrichtung anpassbar ist. Bei dem Antriebsaggregat handelt es sich insbesondere um einen in dem Kraftfahrzeug befindlichen Verbrennungsmotor, der über einen Antriebsriemen mit einer der Kompressorkupplung zugeordneten Riemenscheibe in Verbindung steht. Die Vorgabe des Kraftschlusses erfolgt mittels einer der Kupplungseinrichtung zugeordneten elektromagnetischen Stelleinrichtung, die seitens der Steuereinrichtung über einen zwischengeschalteten Leistungsregler angesteuert wird. Alternativ ist es auch möglich, den Kompressor ohne Zwischenschaltung einer Kompressorkupplung durch Verwendung eines Elektromotors anzutreiben, wobei sich das Antriebsmoment durch Veränderung der Stromaufnahme des Elektromotors gezielt beeinflussen lässt.

Die Steuereinrichtung ermittelt die Zeitgröße vorzugsweise auf Grundlage einer in unmittelbarem oder mittelbarem Zusammenhang mit einer vorhergehenden Inbetriebnahme des Kompressors erfassten Zeitinformation. Die Zeitinformation kann in Gestalt eines Zeitstempels in einen der Steuereinrichtung zugeordneten Speicher eingelesen werden, wobei die Erzeugung des Zeitstempels bei Betätigung eines zum Starten des Verbrennungsmotors vorgesehenen Anlassers erfolgt. Der Zeitstempel umfasst insbesondere Informationen bezüglich Datum und Uhrzeit der Anlasserbetätigung.

Zur Bereitstellung der Zeitinformation kann eine elektronische Zeitbasis vorgesehen sein, die über einen CAN-Datenbus mit der Steuereinrichtung in Verbindung steht. Da eine derartige elektronische Zeitbasis in vielen Kraftfahrzeugen als Bestandteil eines Bordrechners ohnehin vorhanden ist, ist die Umsetzung bzw. Nachrüstung der erfindungsgemäßen Vorrichtung mit vergleichsweise geringem Aufwand möglich.

Die erfindungsgemäße Vorrichtung wird im Folgenden anhand der beigefügten Zeichnungen näher erläutert. Es zeigen:
- Fig. 1: ein schematisch dargestelltes Ausführungsbeispiel der erfindungsgemäßen Vorrichtung zur Steuerung einer Klimatisierungseinrichtung für ein Kraftfahrzeug, und
- Fig. 2: ein Flussdiagramm, das beispielhaft ein Verfahren zum Betreiben der in Fig. 1 dargestellten Vorrichtung wiedergibt.

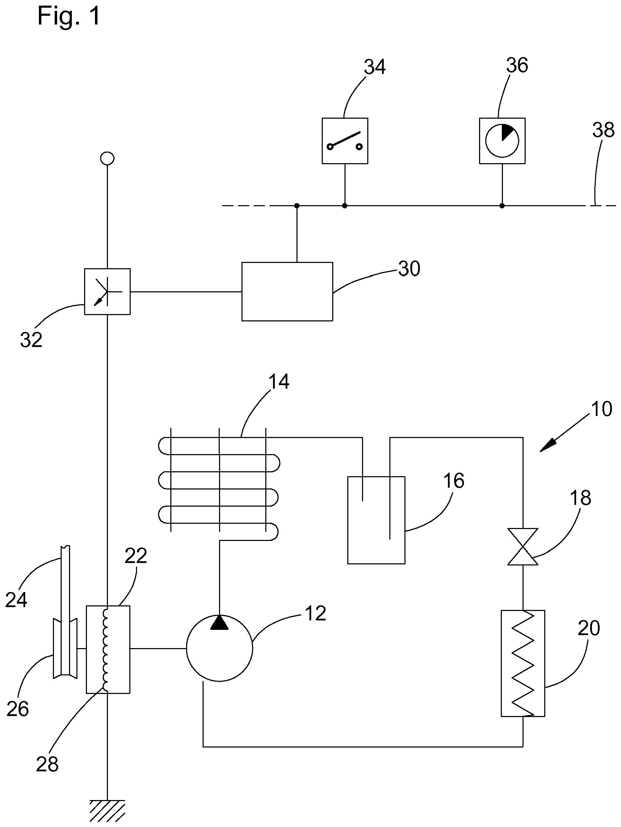

Fig. 1 zeigt ein schematisch dargestelltes Ausführungsbeispiel der erfindungsgemäßen Vorrichtung zur Steuerung einer Klimatisierungseinrichtung für ein Kraftfahrzeug. Bei dem Kraftfahrzeug handelt es sich um ein landwirtschaftliches Nutzfahrzeug, insbesondere einen Traktor.

Die Klimatisierungseinrichtung 10 ist von herkömmlicher Bauart und umfasst einen Kühlkreislauf mit einem Kompressor 12 zum Verdichten eines in dem Kühlkreislauf zirkulierenden Kältemittels, dem zur Schmierung des Kompressors 12 ein geeignetes Schmiermittel zugesetzt ist, sowie ferner einen luftdurchströmten Kondensator 14, einen Flüssigkeitsabscheider 16, ein Dekompressionsventil 18 und einen Verdampfer 20.

Beispielsgemäß wird als Kältemittel handelsübliches R134A und als Schmiermittel ein Kältemittelöl, insbesondere PAG-Öl (Polyalkylenglykol), verwendet.

Der Kompressor 12 wird mittels eines von dem Kraftfahrzeug umfassten Antriebsaggregats in Gestalt eines nicht näher dargestellten Verbrennungsmotors angetrieben. Zwischen dem Kompressor 12 und dem Verbrennungsmotor ist eine elektrisch betätigbare Kompressorkupplung 22 angeordnet, deren Kraftschluss zur gezielten Beeinflussung eines zur Inbetriebnahme des Kompressors 12 aufgewandten Antriebsmoments anpassbar ist. Der Verbrennungsmotor steht hierbei über einen Antriebsriemen 24 mit einer der Kompressorkupplung 22 zugeordneten Riemenscheibe 26 in Verbindung.

Die Anpassung des Kraftschlusses erfolgt mittels einer der Kupplungseinrichtung 22 zugeordneten elektromagnetischen Stelleinrichtung 28, die seitens einer Steuereinrichtung 30 über einen zwischengeschalteten Leistungsregler 32 angesteuert wird. Zur Ansteuerung der elektromagnetischen Stelleinrichtung 28 wertet die Steuereinrichtung 30 einerseits den aktuellen Betätigungszustand einer zur fahrerseitigen Inbetriebnahme und/oder zur Auswahl eines automatisierten Betriebs der Klimatisierungseinrichtung 10 vorgesehenen Schalteranordnung 34 sowie eine seitens einer elektronischen Zeitbasis 36 bereitgestellte Zeitinformation aus, wobei sowohl die Schalteranordnung 34 als auch die elektronische Zeitbasis 36 über einen in dem Kraftfahrzeug befindlichen CAN-Datenbus 38 mit der Steuereinrichtung 30 in Verbindung steht.

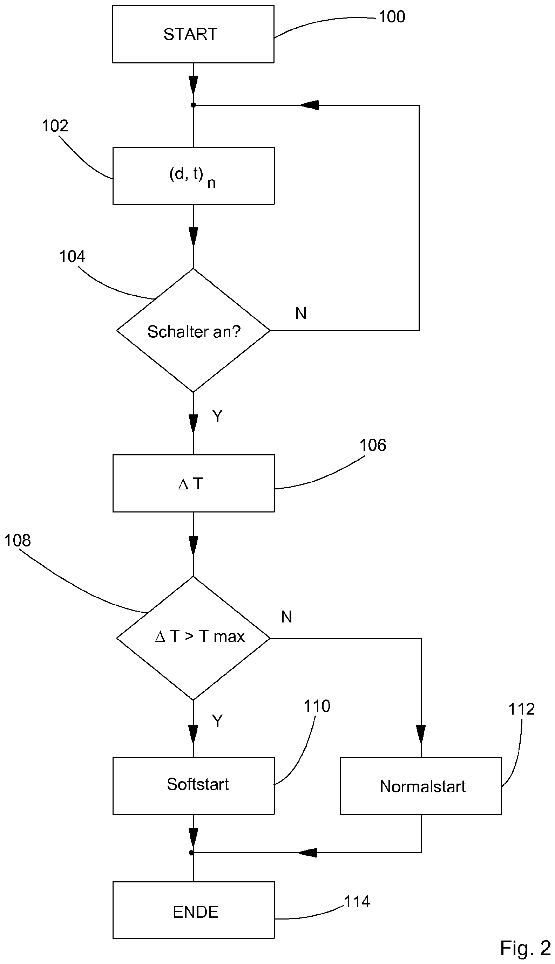

Fig. 2 zeigt ein Flussdiagramm, das beispielhaft ein Verfahren zum Betreiben der in Fig. 1 dargestellten Vorrichtung wiedergibt.

Das in der Steuereinrichtung 30 ablaufende Verfahren wird bei Betätigung eines zum Starten des Verbrennungsmotors vorgesehenen Anlassers in einem Initialisierungsschritt 100 gestartet.

In einem darauffolgenden ersten Verfahrensschritt 102 wird auf Grundlage der seitens der elektronischen Zeitbasis 36 bereitgestellten Zeitinformation ein Zeitstempel (d, t)ₙ erzeugt, der Informationen bezüglich Datum und Uhrzeit der Anlasserbetätigung umfasst. Die derart gebildete Zeitinformation wird anschließend in einen der Steuereinrichtung 30 zugeordneten Speicher eingelesen und steht dort mit einem bei einer vorhergehenden Anlasserbetätigung eingelesenen Zeitstempel (d, t)ₙ₋₁ zur weiteren Verarbeitung zur Verfügung.

In einem zweiten Verfahrensschritt 104 überprüft die Steuereinrichtung 30 durch Auswertung des Betätigungszustands der Schalteranordnung 34, ob eine fahrerseitige Inbetriebnahme der Klimatisierungseinrichtung 10 beabsichtigt und/oder deren automatisierter Betrieb ausgewählt ist. Ist dies nicht der Fall, so wird ein gegebenenfalls vorliegender Kompressorbetrieb durch Ausrücken der Kompressorkupplung 22 unterbrochen, und das Verfahren kehrt zum ersten Verfahrensschritt 102 zurück. Ergibt sich im zweiten Verfahrensschritt 104 hingegen, dass eine fahrerseitige Inbetriebnahme der Klimatisierungseinrichtung 10 beabsichtigt und/oder deren automatisierter Betrieb ausgewählt ist, so wird mit einem dritten Verfahrensschritt 106 fortgefahren, in dem die Steuereinrichtung 30 auf Grundlage eines zwischen den beiden Zeitstempeln (d, t)ₙ₋₁ und (d, t)ₙ durchgeführten Vergleichs eine Zeitgröße ermittelt, die eine zwischen den beiden aufeinanderfolgenden Anlasserbetätigungen n und n - 1 verstrichene Kompressorstandzeit ΔT wiedergibt.

Stellt die Steuereinrichtung 30 durch Auswertung der ermittelten Zeitgröße in einem vierten Verfahrensschritt 108 fest, dass die verstrichene Kompressorstandzeit ΔT einen nach Maßgabe der charakteristischen Absetzungsneigung des verwendeten Schmiermittels vorgegebenen Schwellenwert Tₘₐₓ in der Größenordnung mehrerer Wochen bzw. Monate überschreitet, so wird in einem nachfolgenden fünften Verfahrensschritt 110 der Kraftschluss der Kompressorkupplung 22 durch geeignete Ansteuerung der elektromagnetischen Stelleinrichtung 28 derart angepasst, dass der Kompressor 12 lediglich mit einem Teil des zur Verfügung stehenden Antriebsmoments des Verbrennungsmotors beaufschlagt wird ("Softstart"). Insofern wird also das zur Inbetriebnahme des Kompressors 12 aufgewandte Antriebsmoment nach Maßgabe der ermittelten Zeitgröße verringert. Anschließend wird der Kraftschluss der Kompressorkupplung 22 kontinuierlich innerhalb einer dafür vorgesehenen Zeitspanne bis zum Erreichen eines für den Normalbetrieb vorgesehenen Werts erhöht. Die Zeitspanne richtet sich hierbei nach der zur Vermischung des Kältemittels und des Schmiermittels erforderlichen Kompressorlaufzeit und liegt in der Größenordnung von 30 Sekunden bis zu einigen Minuten. Auf diese Weise wird eine besonders schonende bzw. verschleißarme Inbetriebnahme des Kompressors 12 für den Fall längerer Kompressorstandzeiten gewährleistet. Das Verfahren wird danach in einem Schlussschritt 114 beendet.

Stellt die Steuereinrichtung 30 durch Auswertung der ermittelten Zeitgröße im vierten Verfahrensschritt 108 hingegen fest, dass die verstrichene Kompressorstandzeit ΔT den vorgegebenen Schwellenwert Tₘₐₓ nicht überschreitet, so wird der Kraftschluss der Kompressorkupplung 22 in einem sechsten Verfahrensschritt 112 unmittelbar auf den für den Normalbetrieb vorgesehenen Wert erhöht ("Normalstart"). Danach wird das Verfahren im Schlussschritt 114 beendet.

## Patentansprüche

1. Vorrichtung zur Steuerung einer Klimatisierungseinrichtung für ein Kraftfahrzeug, umfassend einen mittels eines Kompressors (12) betriebenen Kühlkreislauf mit einem Kältemittel, das mit einem Schmiermittel zur Schmierung des Kompressors (12) versetzt ist, **dadurch gekennzeichnet, dass** mittels einer Steuereinrichtung (30) ein zur Inbetriebnahme des Kompressors (12) aufgewandtes Antriebsmoment nach Maßgabe einer ermittelten Zeitgröße, die eine verstrichene Kompressorstandzeit (ΔT) wiedergibt, verringert wird.

2. Vorrichtung nach Anspruch 1, **dadurch gekennzeichnet, dass** die Steuereinrichtung (30) das zur Inbetriebnahme des Kompressors (12) aufgewandte Antriebsmoment verringert, wenn sich durch Auswertung der ermittelten Zeitgröße ergibt, dass die verstrichene Kompressorstandzeit (ΔT) einen vorgegebenen Schwellenwert (Tₘₐₓ) überschreitet.

3. Vorrichtung nach Anspruch 1 oder 2, **dadurch gekennzeichnet, dass** zwischen dem Kompressor (12) und einem Antriebsaggregat des Kraftfahrzeugs eine elektrisch betätigbare Kompressorkupplung (22) angeordnet ist, deren Kraftschluss zur Verringerung des Antriebsmoments seitens der Steuereinrichtung (30) anpassbar ist.

4. Vorrichtung nach einem der Ansprüche 1 bis 3, **dadurch gekennzeichnet, dass** die Steuereinrichtung (30) die Zeitgröße auf Grundlage einer in Zusammenhang mit einer vorhergehenden Inbetriebnahme des Kompressors (12) erfassten Zeitinformation ermittelt.

5. Vorrichtung nach einem der Ansprüche 1 bis 4, **dadurch gekennzeichnet, dass** die Zeitinformation seitens einer elektronischen Zeitbasis (36) bereitgestellt wird, die über einen CAN-Datenbus (38) mit der Steuereinrichtung (30) in Verbindung steht.

6. Kraftfahrzeug, insbesondere landwirtschaftliches Nutzfahrzeug, mit einer Vorrichtung zur Steuerung einer Klimatisierungseinrichtung (10) nach einem der Ansprüche 1 bis 5.

## Claims

1. Device for controlling an air conditioning unit for a motor vehicle, comprising a cooling circuit operated by means of a compressor (12) with a refrigerant to which a lubricant for lubricating the compressor (12) is added, **characterized in that**, by means of a control device (30), a drive torque expended to start up the compressor (12) is reduced in accordance with a determined time variable which reproduces an elapsed compressor service time (ΔT).

2. Device according to Claim 1, **characterized in that** the control device (30) reduces the drive torque expended to start up the compressor (12) if the result of an evaluation of the determined time variable is that the elapsed compressor service time (ΔT) exceeds a predefined threshold value (Tₘₐₓ).

3. Device according to Claim 1 or 2, **characterized in that**, between the compressor (12) and a drive assembly of the motor vehicle, there is arranged an electrically operable compressor clutch (22), the frictional connection of which can be adapted by the control device (30) in order to reduce the drive torque.

4. Device according to one of Claims 1 to 3, **characterized in that** the control device (30) determines the time variable on the basis of time information acquired in connection with a preceding start-up of the compressor (12).

5. Device according to one of Claims 1 to 4, **characterized in that** the time information is provided by an electronic time base (36), which is connected to the control device (30) via a CAN data bus (38).

6. Motor vehicle, in particular agricultural utility vehicle, having a device for controlling an air conditioning unit (10) according to one of Claims 1 to 5.

## Revendications

1. Ensemble de commande d'un dispositif de climatisation pour véhicule automobile, comprenant un circuit de refroidissement alimenté par un compresseur (12) en un fluide de refroidissement additionné d'un lubrifiant qui lubrifie le compresseur (12),
**caractérisé en ce que**
un couple d'entraînement appliqué pour la mise en service du compresseur (12) est diminué au moyen d'un dispositif de commande (30) en fonction d'une grandeur temporelle qui a été déterminée et qui représente la durée de service (Δt) exécutée par le compresseur.

2. Ensemble selon la revendication 1, **caractérisé en ce que** le dispositif de commande (30) diminue le couple d'entraînement appliqué pour la mise en service du compresseur (12) si l'évaluation de la grandeur temporelle qui a été déterminée indique que la durée de service (Δt) exécutée par le compresseur dépasse une valeur de seuil (Tₘₐₓ) prédéterminée.

3. Ensemble selon les revendications 1 ou 2, **caractérisé en ce qu'**un embrayage (22) de compresseur actionné électriquement, dont le raccordement forcé en vue de diminuer le couple d'entraînement peut être adapté par le dispositif de commande (30) est disposé entre le compresseur (12) et un ensemble d'entraînement du véhicule automobile.

4. Ensemble selon l'une des revendications 1 à 3, **caractérisé en ce que** le dispositif de commande (30) détermine la grandeur temporelle sur la base d'une information de temps saisie à l'occasion d'une mise en service précédente du compresseur (12).

5. Ensemble selon l'une des revendications 1 à 4, **caractérisé en ce que** l'information de temps est délivrée par une base électronique de temps (36) qui est raccordée au dispositif de commande (30) par l'intermédiaire d'un bus de données CAN (38).

6. Véhicule automobile, en particulier véhicule utilitaire agricole, doté d'un ensemble de commande d'un dispositif de climatisation (10) selon l'une des revendications 1 à 5.
